# EUROPEAN PATENT APPLICATION

(11) **EP 2 555 120 A1**
(43) Date of publication of application: **06.02.2013**
(21) Application number: 11765746.0
(22) Date of filing: 31.03.2011
(51) Int. Cl.: G06F 13/00, G06F 3/048

(54) **INFORMATION PROCESSING DEVICE, INFORMATION PROCESSING METHOD, INFORMATION PROCESSING PROGRAM, AND STORAGE MEDIUM**

(30) Priority: 31.03.2010 JP 2010080904
(71) Applicant: Rakuten, Inc., Tokyo 140-0002 (JP)
(72) Inventor: MASUKO Soh, Tokyo 140-0002 (JP); ABE Hiroshi, Tokyo 140-0002 (JP)
(74) Representative: HOFFMANN EITLE
(86) International application number: PCT/JP2011/058234
(87) International publication number: WO 2011/125846

(57) **Abstract**

The present invention includes: acquiring a message related to a web site designated by a first user and link information to a web page of the web site, from a storage means that stores the message and the link information (S2 and S4) ; causing the message and the link information to be displayed on a user terminal 30 of a second user (S7) ; and, when the second user selects the web page shown by the link information, performing notification processing of notifying to the first user that the web page is selected (S8, S9 and S11).

## Description

### TECHNICAL FIELD

The present invention relates to a technical field of an information processing device,aninformation processing method, an information processing program and a storage medium which process information related to shopping sites on the Internet.

### BACKGROUND ART

To promote, for example, sales of products on the Internet, product information is introduced using, for example, e-mails. For example, Patent Document 1 discloses a product introducing system that, when a web server distributes a web page according to a request from a first terminal, selects a product, creates memo information in which a model number of one or more selected products is described in association with one memo number and stores the memo information in the database server, and receives a request of introducing product information to a second terminal and the memo number from the first terminal, causes a mail server to transmit an e-mail to which the corresponding memo number is attached, to the second terminal, reads the model number described in association with the memo number when receiving an introduction request including the memo number from the second terminal, extracts product information based on the model number, and provides the product information to the second terminal.

### CITATION LIST

### PATENT DOCUMENT

Patent Document 1: Japanese Patent Application Laid-Open No. 2009-217338

### SUMMARY OF THE INVENTION

### PROBLEM TO BE SOLVED BY THE INVENTION

However, according to Patent Document 1, although information about a product which a user of the first terminal selects and introduces is transmitted to a user of the second terminal, even if information about, for example, a product is introduced to friends and the like, whether or not friends browse the introduced information cannot be learned. Therefore, particularly when a given user transmits a message related to a specified message, it is not possible to confirm whether a user who has received the message selects a web site by way of, for example, clicking and browses the web site in addition to the message, and therefore it is difficult to further develop a topic.

The present invention is made in light of this problem, and an example of an object of the present invention is to provide, for example, an information processing device to confirm whether a user who has received a message selects a web site related to the message.

### MEANS FOR SOLVING THE PROBLEM

In order to solve the above problem, the invention described in claim 1 includes: an information acquiring means that acquires a message related to a web site specified by a first user and link information to a web page of the web site, from a storage means that stores the message and the link information; a transmitting means that transmits the message and the link information to a terminal device to cause the message and the link information to be displayed on the terminal device of a second user; a receiving means that receives selection information showing that the second user selects the web page shown by the link information from the terminal device; and a notification processing means that performs notification processing of notifying to the first user that the web page shown by the link information is selected.

In the information processing device described in claim 1, the invention described in claim 2 is characterized in that the information acquiring means acquires an image object displayed on the terminal device, and the transmitting means transmits the image object along with the message and the link information.

In the information processing device described in claim 2, the invention described in claim 3 is characterized in that the information acquiring means acquires user attribute information related to an attribute of the first user, and the transmitting means transmits the image object based on the user attribute information.

In the information processing device described in claim 2 or claim 3, the invention described in claim 4 is characterized in that a web site designated by the first user is a web site at which a product is purchased, and the information acquiring means acquires the image object which is partitioned into a plurality of regions and which associates the product with each of the regions.

In the information processing device described in any one of claims 1 to 4, the invention described in claim 5 is characterized in that the notificationprocessingmeans performs notification processing to a third user that the web page shown by the link information is selected.

The invention described in claim 6 is characterized in that an information processing method of processing information in an information processing device includes: an information acquiring step of acquiring a message related to a web site designated by a first user and link information to a web page of the web site, from a storage means that stores the message and the link information; a display step of causing the message and the link information to be displayed on a terminal device of a second user; and a notification processing step of, when the second user selects the web page shown by the link information, performing notification processing of notifying to the first user that the web page is selected.

The invention described in claim 7 causes a computer to execute: an information acquiring step of acquiring a message related to a web site designated by a first user and link information to a web page of the web site, from a storage means that stores the message and the link information; a display step of causing the message and the link information to be displayed on a terminal device of a second user; and a notification processing step of, when the second user selects the web page shown by the link information, performing notification processing of notifying to the first user that the web page is selected.

In the information processing program described in claim 7, the invention described in claim 8 is characterized in that the information acquiring step acquires an image object displayed on the terminal device, and the display step causes the image object along with the message and the link information to be displayed.

In the information processing program described in claim 8, the invention described in claim 9 is characterized in that the information acquiring step acquires user attribute information related to an attribute of the first user, and the display step causes the image obj ect based on the user attribute information to be displayed.

In the information processing program described in claim 8 or claim 9, the invention described in claim 10 is characterized in that a web site designated by the first user is a web site at which a product is purchased, and the information acquiring step acquires the image object which is partitioned into a plurality of regions and which associates the product with each of the regions.

In the information processing program described in any one of claims 7 to 10, the invention described in claim 11 is characterized in that the display step causes the message and the link information to be displayed on the terminal device according to an activation state of software executed by the terminal device.

In the information processing program described in any one of claims 7 to 11, the invention described in claim 12 is characterized in that when the second user accesses a web site, the display step causes the message and the link information to be displayed on the terminal device.

In the information processing program described in any one of claims 7 to 12, the invention described in claim 13 is characterized in that when the second user selects the web page shown by the link information, the notification processing step performs notification processing of notifying to a third user that the web page is selected.

In the information processing program described in any one of claims 7 to 13, the invention described in claim 14 is characterized in that causes the computer to further execute: an image obj ect moving step of moving the image obj ect on a display unit of the terminal device; and a web page display step of causing a web page of a link destination of the link information to be displayed on the display unit according to a change in a distance between the image object and a pointer displayed on the display unit.

In the information processing program described in any one of claims 7 to 14, the invention described in claim 15 is characterized in that the display step causes an application executed by the terminal device to display the image object in a vicinity of a display area displayed in a display unit of the terminal device.

In the information processing program described in any one of claims 7 to 14, the invention described in claim 16 is characterized in that the information processing program further causes the computer to execute a blank area specifying step of specifying a blank area which does not display a display element displayed in a screen of a display unit of the terminal device, and the display step causes the message and the link information to be displayed in the specified blank area.

An invention described in claim 17 has an information processing program recorded thereon which causes a computer to execute: an information acquiring step of acquiring a message related to a web site designated by a first user and link information to a web page of the web site, from a storage means that stores the message and the link information; a display step of causing the message and the link information to be displayed on a terminal device of a second user; and a notification processing step of, when the second user selects the web page shown by the link information, performing notification processing of notifying to the first user that the web page is selected.

### EFFECT OF THE INVENTION

The present invention acquires a message related to a web site designated by a first user and link information to a web page of the web site, from a storage means that stores the message and the link information, causes the message and the link information to be displayed on a terminal device of a second user, and, when the second user selects the web page shown by the link information, performs notification processing of notifying to the first user that the web page is selected, so that it is possible to notify to the first user who has transmitted the message whether or not the user who has received the message has selected the web site related to the message.

### BRIEF DESCRIPTION OF THE DRAWINGS

Fig. 1 illustrates a schematic diagram that illustrates a schematic configuration example of an information processing system according to a first embodiment of the present invention.
Fig. 2 illustrates a block diagram that illustrates an example of a schematic configuration of a shopping server in Fig. 1.
Fig. 3 illustrates a block diagram that illustrates an example of a schematic configuration of a user terminal in Fig. 1.
Fig. 4 illustrates a sequence diagram that illustrates an operation example in the information processing system in Fig. 1.
Fig. 5 illustrates a schematic diagram that illustrates an example of a screen display displayed on a user terminal of a second user in Fig. 1.
Fig. 6 illustrates a schematic diagram that illustrates an example of a screen display displayed on the user terminal of the second user in Fig. 1.
Fig. 7 illustrates a schematic diagram that illustrates an example of a screen display displayed on a user terminal of a first user in Fig. 1.
Fig. 8 illustrates a schematic diagram that illustrates a first modified example of a screen display displayed on the user terminal of the second user in Fig. 1.
Fig. 9 illustrates a schematic diagram that illustrates a second modified example of a screen display displayed on the user terminal of the second user in Fig. 1.
Fig. 10 illustrates a schematic diagram that illustrates a third modified example of a screen display displayed on the user terminal of the second user in Fig. 1.
Fig. 11 illustrates a flowchart that illustrates an operation example of the information processing system in Fig. 1 according to a second embodiment.
Fig. 12 illustrates a flowchart that illustrates an operation example of the information processing system in Fig. 1 according to a third embodiment.
Fig. 13 illustrates a schematic diagram that illustrates an example of a screen display according to the third embodiment.
Fig. 14 illustrates a schematic diagram that illustrates an example of a screen display according to the third embodiment.
Fig. 15 illustrates a schematic diagram that illustrates an example of a screen display according to the third embodiment.

### MODES FOR CARRYING OUT THE INVENTION

Hereinafter, embodiments of the present invention will be described with reference to the drawings. In addition, the embodiments will be described below where the present invention is applied to an information processing system.

### (First Embodiment)

### [1. Outline of Configuration and Function of Information Processing System]

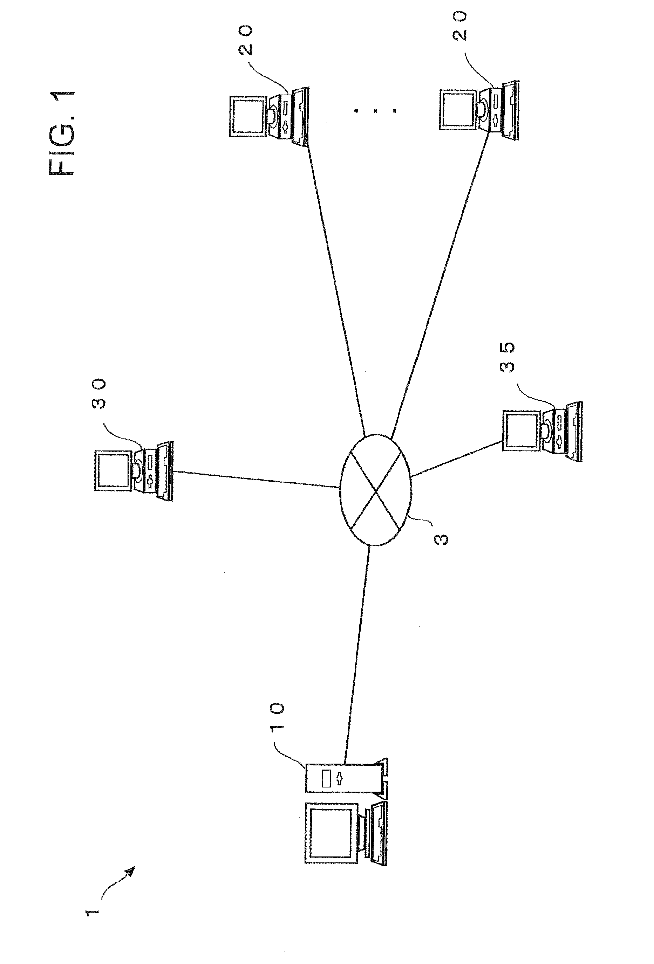

First, a schematic configuration and function of the information processing system according to a first embodiment of the present invention will be described using Fig. 1.

Fig. 1 illustrates a schematic diagram that illustrates a schematic configuration example of an information processing system 1 according to the present embodiment.

As illustrated in Fig. 1, the information processing system 1 has: a shopping server (an example of an information processing device) 10 which is installed to run a shopping site; a user terminal 20 (an example of a terminal device of a second user) of a user who performs an operation of, for example, creating document; a user terminal 30 of a user (an example of a first user) who purchases a product on the shopping site and writes a message such as a comment or a user who writes a message such as a comment on a browsed product; and a user terminal 35 of another user (an example of a third user) who is different from the first user and the second user.

The shopping server 10, the user terminal 20 and the user terminal 30 are connected through a network 3, and can transmit and receive data to and from each other using, for example, TCP/IP for a communication protocol. In addition, the network 3 is constructed with, for example, the Internet, a dedicated communication line (for example, CATV (Community Antenna Television) line), a mobile communication network (including, for example, base stations) and a gate way.

The shopping server 10 functions as, for example, a web server or a database server for selling products at a shopping site, and performs various processings such as acceptance of registration of products from store terminals (not illustrated) of store owners listed at the shopping site, user registration from the user terminal 20 or the user terminal 30 and purchase procedure of products and the like. Further, the shopping server 10 provides an image object displayed on a screen of the user terminal 20, and provides to the user terminal 20 a message such as a product comment on a product which a user of the user terminal 30 purchases or browses, and link information to a web page which lists information related to this product.

Each user terminal 20 is a mobile terminal such as a personal computer, a mobile wireless telephone or a PDA. A user of the user terminal 20 uses the user terminal 20 to create sentences using a document creating application, work using a spread sheet application or open a web page by connecting to the Internet using a web browser application.

The user terminal 30 is a mobile terminal such as a personal computer, a mobile wireless telephone or a PDA. The user of the user terminal 30 purchases products on the Internet, or posts messages such as comments on the purchased products on the Internet.

### [2. Configuration and Function of Server and the like]

### (2.1 Configuration and Function of Shopping Server 10)

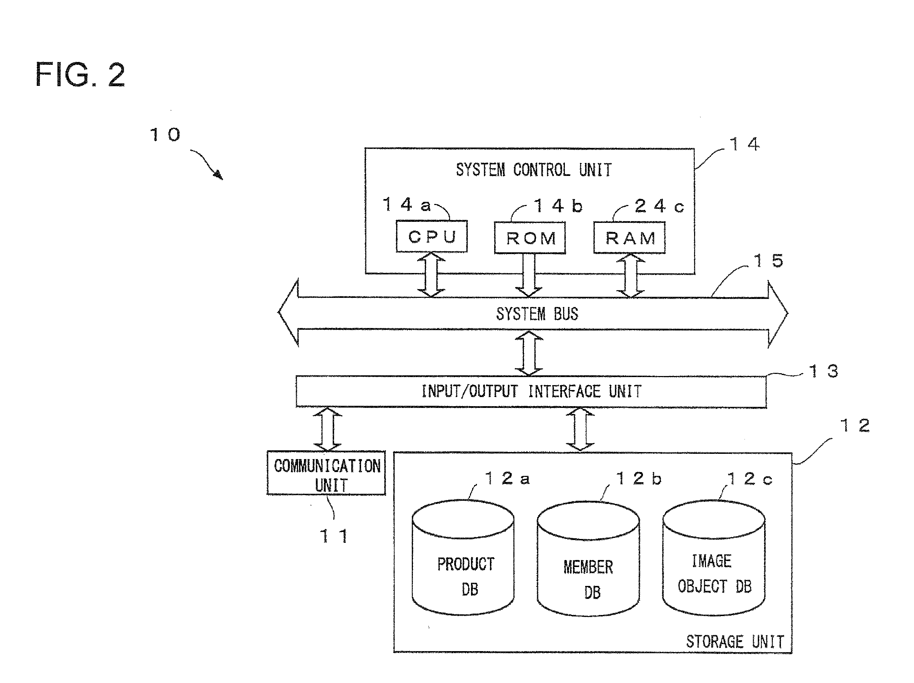

Next, a configuration and a function of the shopping server 10 will be described using Fig. 2.

Fig. 2 illustrates a block diagram that illustrates an example of a schematic configuration of the shopping server 10.

As illustrated in Fig. 2, the shopping server 10 which functions as a computer has a communication unit 11, a storage unit 12 which is an example of a storage means, an input/output interface unit 13 and a system control unit 14. Further, the system control unit 14 and the input/output unit 13 are connected through a system bus 15.

The communication unit 11 connects to the network 3 to control a communication state with, for example, the user terminal 20, and connects to a local area network to transmit and receive data to and from another server on the local area network.

The storage unit 12 is configured to include, for example, a hard disk drive, and stores various programs such as an operating system and a server program, and data. In addition, for example, the various programs may be acquired from another server device through the network 3, or may be recorded in a storage medium and read through a drive device.

Further, in the storage unit 12, for example, a product database (hereinafter, "product DB") 12a, a member database (hereinafter, "member DB") 12b and an image object database (hereinafter, "image object DB") 12c which stores image objects of various formats are constructed.

In the product DB 12a, product information such as a product name, a type, a product image, a specification, and a summary of product introduction, and advertisement information are stored in association with a product ID which is an identifier for identifying a product. Further, in the product DB 12a, for example, files of web pages described by, for example, a markup language such as HTML (HyperText Markup Language) or XML (Extensible Markup Language) are stored.

Next, in the member DB 12b, user attribute information such as a user ID, a name, an address, a telephone number, an e-mail address, the sex and the age of a user, and user information such as points which the user has obtained are registered per user registered as a member of a shopping site such as the user of the user terminal 20 and the user of the user terminal 30. Such user information can be identified per user based on a user ID. Further, in the member DB 12b, a user ID, a log-in ID and a password are registered which a user is required to log in to a shopping site from the user terminal 20 or the user terminal 30. Meanwhile, the log-in ID and the password are log-in information used for log-in processing (processing of authenticating a user).

Further, in the member DB 12b, messages such as product comments from users who have purchased or browsed products like the first user of the user terminal 30, messages such as product comments from users who recommend a given product and messages such as information that a given product is sold at such and such a store are stored in association with a user ID. Furthermore, the user of the user terminal 30 who is an example of the first user is stored in association with a user ID of the user of the user terminal 30 and a user ID of a friend user (the user of the user terminal 20) to, for example, boast about a product to friend users.

Next, in the image object DB 12c, characters imitating shapes of people are stored as an example of image objects displayed on a web page. In the image object DB 12c, characters in various formats in response to user attributes such as the sex and the age of users are stored. Further, in the image obj ect DB 12c, a series of a plurality of characters for representing motions of characters are stored. In addition, an image object may be, for example, an animal, a flower or a car other than a person, a figure or a symbol in addition to a character having a shape of a person.

Further, in the image object DB 12c, a resident program is stored which causes an image obj ect to be displayed on a display unit of the user terminal 20 at a timing when the user of the user terminal 30 posts a product comment and which activates the user terminal 20 as a resident terminal. This resident program is downloaded and installed to the user terminal 20 and the user terminal 30.

Next, the input/output interface unit 13 performs interface processing between the communication unit 11 and the storage unit 12, and the system control unit 14.

The system control unit 14 is configured to include, for example, a CPU (Central Processing Unit) 14a, a ROM (Read Only Memory) 14b and a RAM (Random Access Memory) 14c. When the CPU 14a reads and executes various programs stored in the ROM 14b and the storage unit 12, the system control unit 14 transmits a web page based on a request from the user terminal 20 or the user terminal 30, processes user's purchase of a product and records point information per user ID. Further, the system control unit 14 acquires user attribute information related to attributes of the user of the user terminal 30, from the member DB 12b, acquires a message such as a product comment on a product, from the user terminal 30 and acquires an image object based on user attribute information from the image object DB 12c.

### (2.2 Configuration and Function of User Terminal 20)

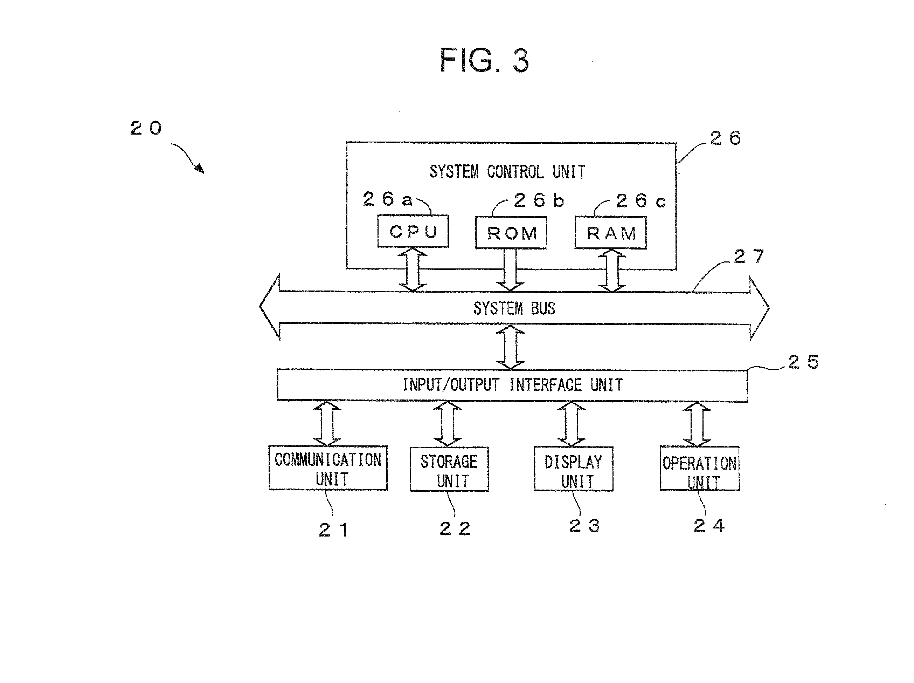

Next, a configuration and a function of the user terminal 20 will be described using Fig. 3.

Fig. 3 is a block diagram that illustrates an example of a schematic configuration of the user terminal 20.

As illustrated in Fig. 3, the user terminal 20 which functions as a computer has a communication unit 21, a storage unit 22 which is an example of a storage means, a display unit 23, an operation unit 24, an input/output interface unit 25 and a system control unit 26. Further, the system control unit 26 and the input/output unit 25 are connected through a system bus 27.

The communication unit 21 controls, for example, a communication state with, for example, the shopping server 10 through the network 3. In addition, when the user terminal 20 is a mobile wireless telephone, the communication unit 21 has a wireless communication unit for connecting to a mobile network of the network 3.

The storage unit 22 is configured to include, for example, a hard disk drive, and stores, for example, an operating system and a web browser program.

The display unit 23 is configured to include, for example, liquid crystal display elements or EL (Electro Luminescence) elements. The display unit 23 displays a display screen of, for example, a document creating application, an image object and a pointer which is moved by operating a mouse.

The operation unit 24 is configured to include, for example, a keyboard and a mouse. The operation unit 24 activates an application and performs an operation of, for example, inputting sentences. In addition, when the display unit 23 is a display panel of a touch switch system such as a touch panel, the operation unit 24 acquires information about a position on the display unit 23 which the user contacts or approaches.

The input/output interface unit 25 performs interface processing between the communication unit 21 and the storage unit 22, and the system control unit 26.

The system control unit 26 is configured to include, for example, a CPU 26a, a ROM 26b and a RAM 26c which is an example of a storage means. Further, when the CPU 26a reads and executes various programs stored in the ROM 26b, the RAM 26c and the storage unit 22, and executes an acquired script, the system control unit 26 acquires a message such as a product comment and an image object from the shopping server 10, and controls the display unit 23 to display a message such as a product comment or an image object.

In addition, a configuration and a function of the user terminal 30 are substantially the same as the configuration and the function of the user terminal 20, and the description thereof will be omitted.

### [3. Operation of Information Processing System]

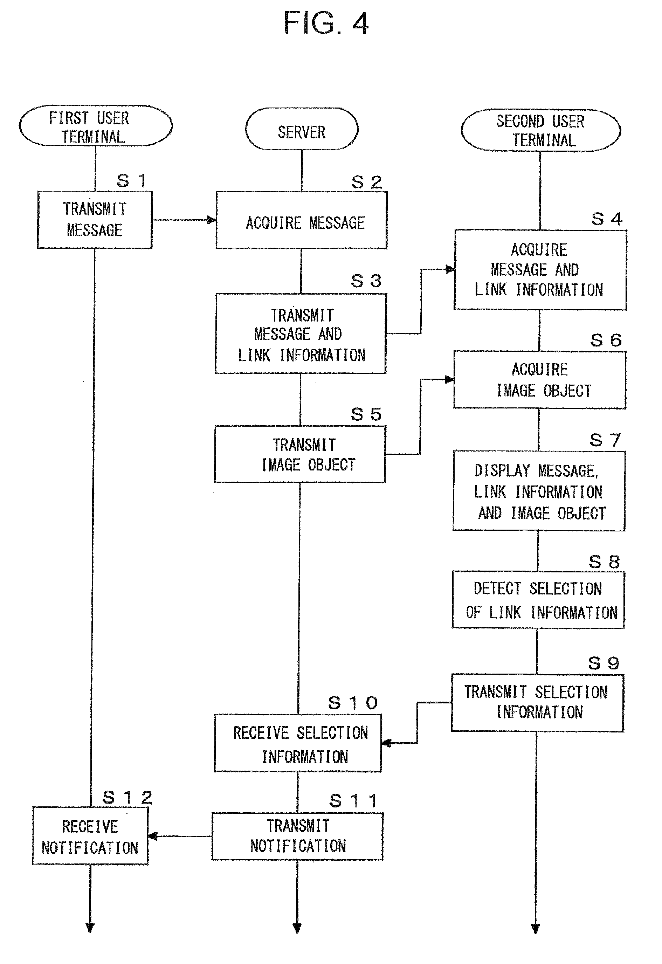

Next, an operation of the information processing system 1 according to the first embodiment of the present invention will be described using Figs. 4 to 7.

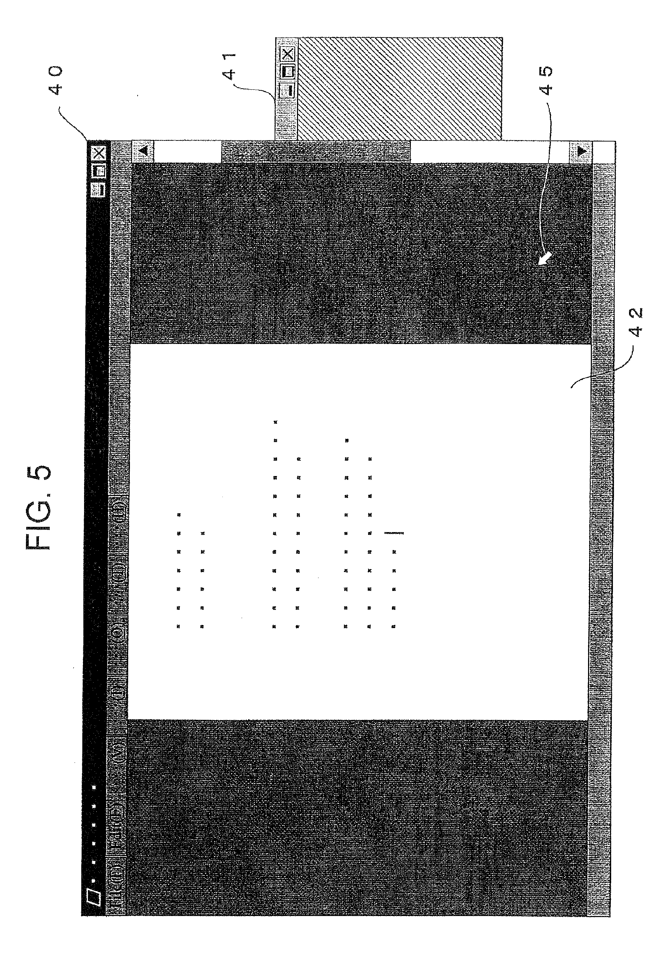

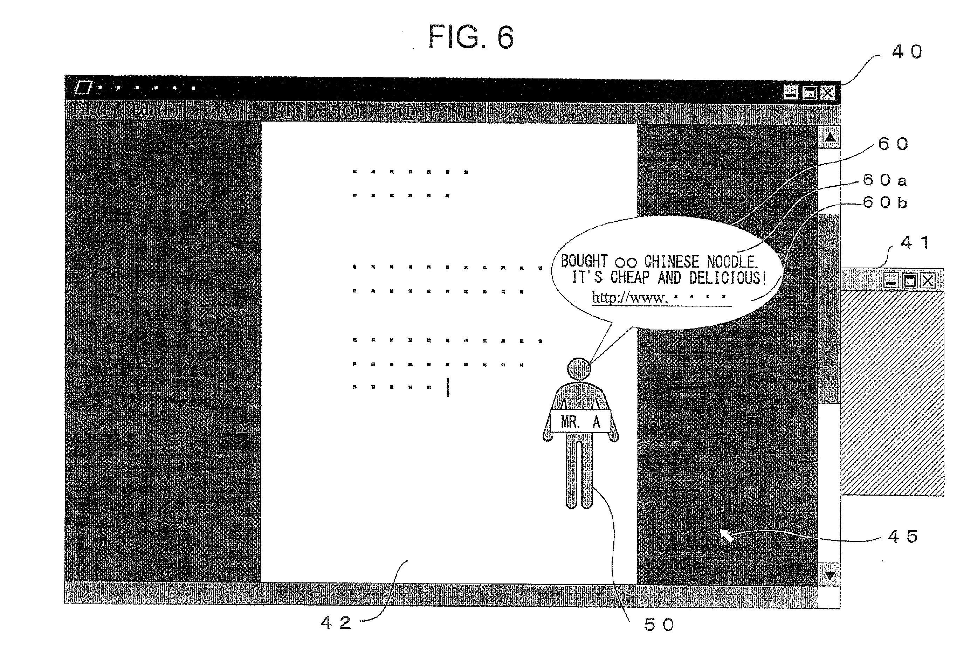

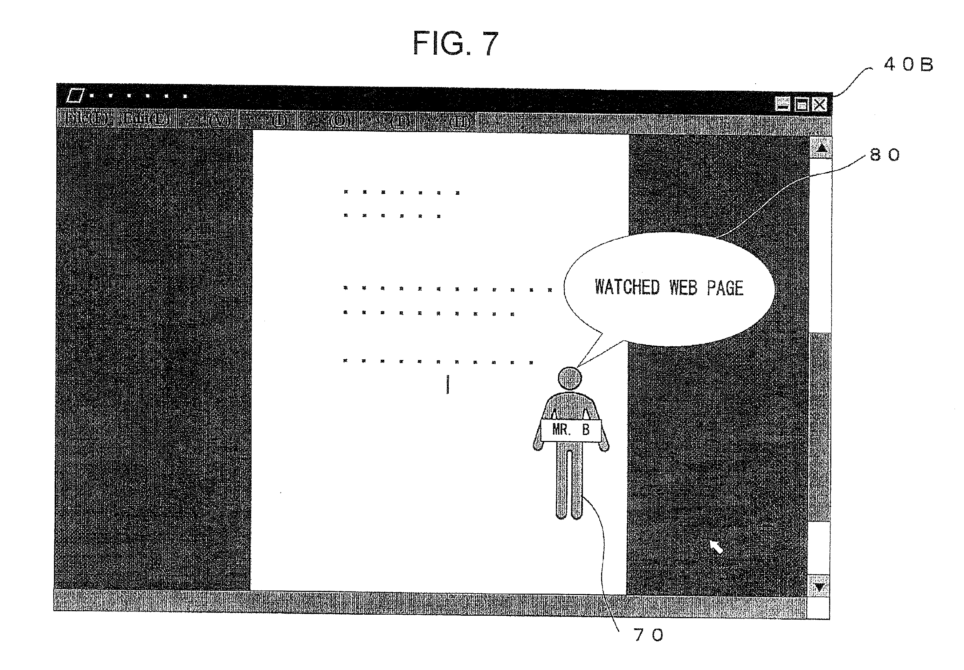

Fig. 4 is a sequence diagram that illustrates an operation example in the information processing system 1. Figs. 5 and 6 are schematic diagrams that illustrate examples of screen displays displayed on the user terminal 20 of the second user. Fig. 7 is a schematic diagram that illustrates an example of a screen display displayed on a user terminal of the first user.

First, for example, the first user or the second user forms a group of friends to boast about, for example, products to each other, and information about this group is associated with a user ID of each user and stored in the member DB 12b. Further, when a resident program for causing an image obj ect to be displayed on the display unit 23 of, for example, the user terminal 20 is downloaded from the image object DB 12c to, for example, the user terminal 20 and is installed to, for example, the user terminal 20 and, for example, the user terminal 20 is activated, the resident program is executed.

Next, utilizing the user terminal 30, the first user writes a message such as a product comment on a product which the first user has purchased or browsed at the shopping site of the shopping server 10. A product comment (an example of a message) includes, for example, an evaluation on a product which the first user has purchased or words for the friends for inviting friends when an incentive is given according to the number of views by friend users by introducing a product to friend users. Further, as illustrated in Fig. 4, the user terminal 30 transmits a message such as a product comment to the shopping server 10 (step S1).

Next, the shopping server 10 acquires a message such as a product comment of the first user (step S2). More specifically, the system control unit 14 of the shopping server 10 receives a message such as a product comment of the first user from the user terminal 30, and associates and stores the message and the user ID of the first user in the member DB 12b. In this case, the system control unit 14 of the shopping server 10 associates and stores the received message and link information related to content of the message. The link information is, for example, URL (Uniform Resource Locator) information of a web page which lists information related to a product at a shopping site of the shopping server 10.

Next, the shopping server 10 transmits the message and the link information received from the user terminal 30, to the user terminal 20 (step S3). More specifically, the system control unit 14 of the shopping server 10 acquires a message and link information of the first user from the member DB 12b based on the user ID of the first user, and transmits the message and the link information, and the user ID of the first user to the user terminal 20. In addition, this user ID is specified based on, for example, log-in information when the first user logs in, and information accompanying a product comment when the product comment is received. Thus, the system control unit 14 of the shopping server 10 functions as an example of a transmitting means that transmits a message and link information to the terminal device to cause the message and the link information to be displayed on the terminal device of the second user. Further, the system control unit 14 of the shopping server 10 functions as an example of an information acquiring means that acquires a message related to a web site designated by the first user and link information to a web page of the web site, from a storage means that stores the message and the link information. The system control unit 14 of the shopping server 10 functions as an example of an information acquiring means that acquires an image object displayed on a terminal.

Next, the user terminal 20 receives a message and link information (step S4). More specifically, the system control unit 26 of the user terminal 20 acquires the message and the link information of the first user from the shopping server 10, and stores the message and the link information in, for example, the storage unit 22 or the RAM 26c.

Next, the shopping server 10 transmits an image object based on user attribute information (step S5). More specifically, the system control unit 14 of the shopping server 10 acquires a corresponding image object from the image object DB 12c based on, for example, the sex and the age of the first user included in user attribute information of the first user and conditions selected by the first user, and transmits the image object to the user terminal 20. Thus, the system control unit 14 of the shopping server 10 functions as an example of an image object acquiring means that acquires the image object which is displayed on the display unit of the user terminal of the second user and which is based on user attribute information.

Next, the user terminal 20 receives an image object based on user attribute information (step S6). More specifically, the system control unit 26 of the user terminal 20 acquires an image object from the shopping server 10 based on user attribute information, and stores the image object in, for example, the storage unit 22 and the RAM 26c.

Next, the user terminal 20 displays the message and the image obj ect on the display unit 23 (step S7). More specifically, as illustrated in Fig. 5, a window 40 of a document creating application activated by the user terminal 20 of the second user is opened on the display unit 23 of the user terminal 20 . Further, the second user is performing an operation of, for example, creating sentences by inputting sentences in a working area 42 of a document creating application which is an example of a display area of the application. Meanwhile, unlike a window 41 which is inactive-displayed, the window 40 is active-displayed.

Thus, when receiving a message such as a product comment of the first user newly registered in the member DB 12b and the image object of the first user from the shopping server 10 in a state where a predetermined passes after the application executed by the user terminal 20 is activated, and the application is active-displayed, the system control unit 26 of the user terminal 20 displays an image object 50 of "Mr. A" who is the first user as illustrated in Fig. 6 and a balloon display 60 on a display unit 32. The balloon display 60 includes a product comment 60a, and link information 60b to a web page which lists information related to a product.

Meanwhile, a timing to display, for example, a message on the display unit 23 may be determined in response to an activation state such as an activation state of a CPU or an activation state of software such as an application. For example, after acquiring an activation state of the CPU 26a of the user terminal 20 which displays, for example, a message, the message is not displayed when a CPU operation rate is a predetermined rate or more (for example, 60% or more), and is displayed when the CPU operation rate is a predetermined rate or less. In addition, the operation state of the CPU, and data including data showing whether or not to display a message may be stored in the storage unit 12.

The image object 50 and the balloon display 60 are displayed at positions at which the image objects do not bother user's operation as much as possible. In addition, the system control unit 26 of the user terminal 20 reads a message, an image, an object and link information stored in, for example, the storage unit 22 or the RAM 26c to display on the display unit 32. Thus, the system control unit 26 of the user terminal 20 functions as an example of an information acquiring means that acquires a message related to a web site designated by a first user and link information to a web page to the web site, from a storage means that stores the message and the link information.

Further, the system control unit 26 of the user terminal 20 functions as an example of a display means that causes amessage and link information to be displayed on a terminal of the second user. Furthermore, the system control unit 26 of the user terminal 20 functions as an example of a display means that causes an image object along with a message and link information to be displayed. Still further, the system control unit 14 of the shopping server 10 functions as an example of the display means by providing a resident program to, for example, the user terminal 20.

Next, the user terminal 29 detects a selection of link information (step S8). More specifically, when the second user shows an interest, moves a pointer 45 by means of the operation unit 24 and selects link information 60b and the image object 50 by way of, for example, clicking, the system control unit 26 of the user terminal 20 detects a signal showing that the link information is selected.

Next, the user terminal 20 transmits a selection information of the link information (step S9). More specifically, the system control unit 26 of the user terminal 20 transmits a selection information of the link information, the user ID of the first user, and the user ID of the second user to the shopping server 10. In addition, when a web page shown by the link information is not managed by the shopping server 10, if the link information is selected by the second user by way of clicking or touching on a touch panel, the application installed in advance in the user terminal 20 of the second user transmits a request to a link destination server and transmits a notification that link information is selected, to the shopping server 10. In addition, when a domain of a link destination which requests a web page to be displayed is the same domain as the shopping server 10, the application may be programmed such that the notification that the link information is selected is not transmitted to the shopping server 10. Thus, the system control unit 26 of the user terminal 20 functions as an example of a notification processing means that performs notification processing of, when the second user selects a web page shown by link information, notifies to the first user that the web page has been selected.

Next, the shopping server 10 receives selection information for a link information (step S10). More specifically, the system control unit 14 of the shopping server 10 receives the selection information for the link information, the user ID of the first user and the user ID of the second user from the user terminal 20. Further, the system control unit 14 of the shopping server 10 transmits a web page related to the selected link information to the user terminal 20. Furthermore, the system control unit 26 of the user terminal 20 receives the web page which lists information related to a product, from the shopping server 10, and controls the display unit 23 to display the web page . In addition, when the web browser is not activated, the web browser is activated and then a web page is displayed. Thus, the system control unit 14 of the shopping server 10 functions as an example of a receiving means that receives the selection information showing that the web page shown by the link information is selected by the second user, from the terminal device. In addition, a specific example of selection information includes click information or touch information with respect to the touch panel.

Next, the shopping server 10 transmits a notification (step S11). More specifically, the system control unit 14 of the shopping server 10 transmits the notification that the web page is selected, to the user terminal 30 based on the user ID of the first user. Still more specifically, the system control unit 14 of the shopping server 10 transmits an e-mail address of the first user to, for example, an e-mail server in order to transmit the notification that the web page is selected, to the e-mail address of the first user. Thus, the system control unit 14 of the shopping server 10 functions as an example of a notification processing means that, when the second user selects a web page shown by the link information, performs notification processing of notifying to the first user that the web page shown by the link information is selected.

Next, the user terminal 30 receives a notification (step S12). More specifically, a system control unit (not illustrated) of the user terminal 30 receives a notification that the web page related to the message sent by the first user is selected, as an e-mail from the mail server, and controls adisplayunit (not illustrated) of the user terminal 30 to display, for example, an image object 70 imitating the first user and a message as in, for example, a balloon display 80 on a web page 40B.

In addition, the image object 70 displayed on the user terminal 30 and the message as in, for example, the balloon display 80 are displayed at positions at which the image objects do not bother user's operations as much as possible similar to, for example, the image object 50 and the balloon display 60 displayed on the user terminal 20 as illustrated in step S7.

Further, an application of a resident program for displaying a notification of a reply to a transmitted message may be installed in the user terminal 30 of the first user, and the resident program may cause the notification of the reply from the shopping server 10 to be displayed on the display unit of the user terminal 30 as a push-type information distribution.

As described above, according to the present embodiment, a message related to the web site designated by the first user and link information to a web page of the web site are acquired from a storage means that stores the message and the link information, the message and the link information as in, for example, the balloon display 60 are displayed on the user terminal 30 of the second user, and notification processing of notifying to the first user that the web page is selected is performed when the second user selects the web page shown by the link information, so that it is possible to notify to the first user who has transmitted the message whether or not the user who has received the message has selected the web site related to the message. Further, when it is confirmed that, for example, the web page is browsed and the web page is selected, users can feel free to talk about it.

Furthermore, when the image object 50 displayed on the user terminal 30 is acquired, and the image object 50 along with the message and the link information as in, for example, the balloon display 60 are displayed, the image obj ect 50 is displayed on the display unit 23, so that an effect of the message improves as a message from the image object 50.

Still further, when user attribute information related to the attributes of the first user is acquired and the image object 50 based on the user attribute information is displayed, an image object based on the attributes of the first user is displayed, so that it is possible to clearly recognize that the message is sent from the first user, and the second user can more easily respond to it.

Still further, when an image object associated with link information is acquired, the link information 60b is associated with the image object 50 and this image object is displayed on the display unit 23, so that the user can access a web page related to a product only by clicking, for example, the link information 60b or the image object, and promote sales of the product for the second user.

In addition, the system control unit 14 of the shopping server 10 may also transmit a notification that the web page related to the message sent by the first user, to the user terminal 35 of the third user other than the first user. In this case, by transmitting a notification that a web page is selected by clicking the link information of the second user, to the third party, it is possible to widely encourage other users to purchase and browse a product. When, for example, a message that the first user has purchased a given product and link information are displayed on the user terminal 20 of the second user who is, for example, a friend of the first user after the first user purchased a given product, and the second user clicks link information, a notification that the web page is selected is also transmitted by, so-called a chain system, to the user terminal 35 of the third user who is, for example, a friend of the second user in addition to the user terminal 30 of the first user.

Further, a message that the first user has purchased a given product may also be transmitted to the user terminal 20 of the second user who is, for example, a friend of the first user and the user terminal 35 of the third user who is, for example, a friend of the first user after the first user purchased a given product, or the first user, the second user and the third user may be transmit and receive messages from each other.

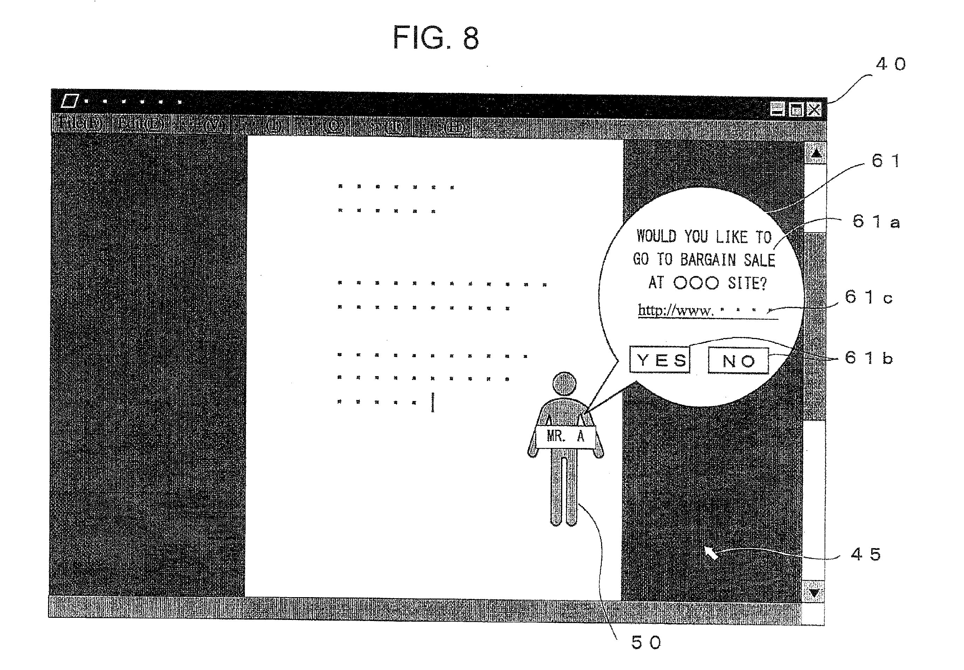

Next, a first modified example of a screen display displayed on a user terminal will be described using Fig. 8.

Fig. 8 illustrates a schematic diagram that illustrates the first modified example of a screen display displayed on the user terminal 20.

As illustrated in Fig. 8, in step S4, the image object 50 of "Mr. A" who is the first user, and a balloon display 61 are displayed on the display unit 32 instead of the balloon display 60. The balloon display 61 includes a product comment 61a, button portions 61b for asking an intention of jumping to a web page which lists information related to a product and a link information 61c.

When a "YES" button of the button portions 61b or the link information 61c is selected as an example of selection of a web page, the system control unit 14 of the shopping server 10 transmits the web page related to the selected link information, to the user terminal 20. Further, the system control unit 14 of the shopping server 10 transmits a notification that the web page is selected, to the user terminal 30. In addition, the system control unit 14 of the shopping server 10 may transmit this notification and the link information to the user terminal 35 of the third user. Further, when a "NO" button of the button portions 61b is selected, the image object 50 and the balloon display 61 are erased from the display unit 23.

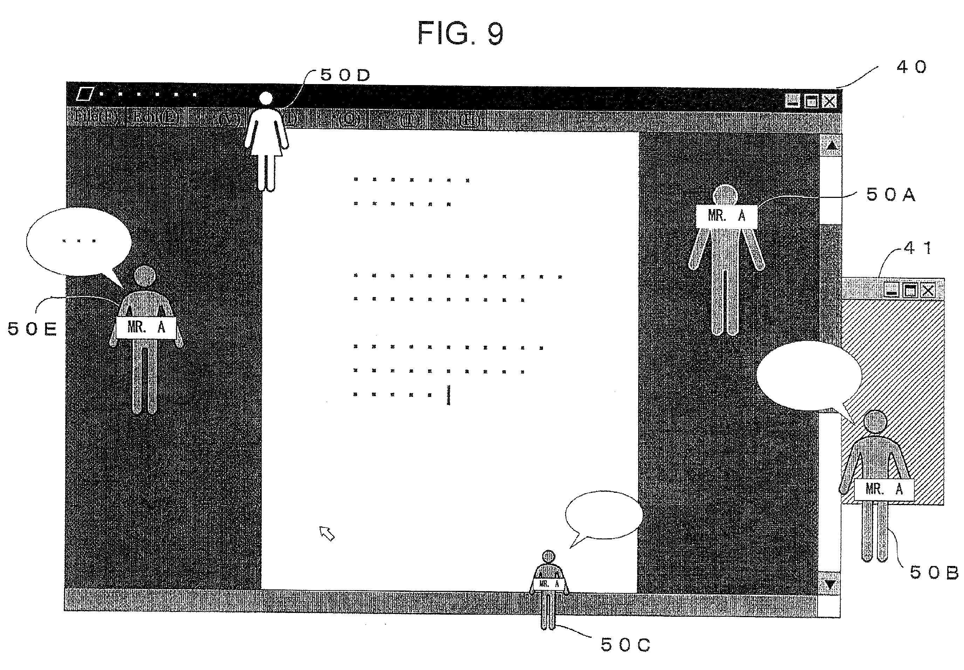

Next, a second modified example of a screen display displayed on a user terminal will be described using Fig. 9. Fig. 9 is a schematic diagram that illustrates a second modified example of a screen display displayed on the user terminal.

As illustrated in Fig. 9, image objects 50A, 50B, 50C, 50D and 50E may be displayed at some position in the vicinity of the application working area 42 which is an example of a vicinity of a display area which displays an application. The image objects only need to be displayed at positions at which the image objects do not bother second user's use of the application. In the display unit 23, for example, the image obj ect 50A is displayed in the vicinity of the display area which displays the application, which does not bother user's operations.

Thus, the system control unit 26 of the user terminal 20 functions as an example of a display means that causes an image object to be displayed at a specific position around a display area which displays an application in the display unit. Further, the system control unit 14 of the shopping server 10 functions as an example of a display means that causes an image object to be displayed at a specific position around the display area which displays an application in the display unit by providing the resident program to the user terminal 20. In addition, as illustrated in Fig. 9, for example, the image object 50A or the image object 50D is an example of an image object based on user attribute information such as the sex.

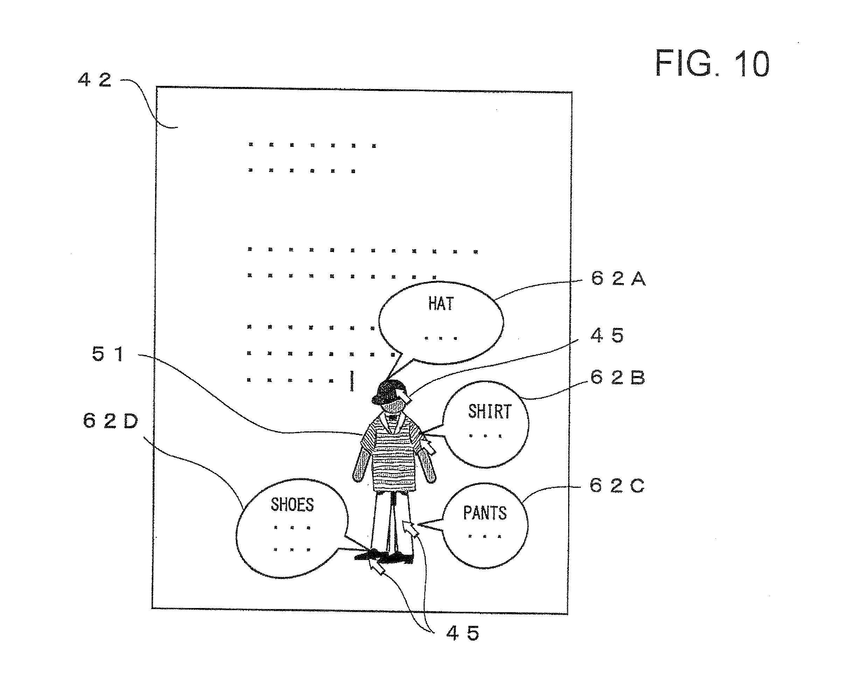

Next, a third modified example of a screen display displayed on a user terminal will be described using Fig. 10.

Fig. 10 is a schematic diagram that illustrates the third modified example of a screen display displayed on the user terminal 20.

As illustrated in Fig. 10, related information of products which, for example, the first user has purchased is associated with a plurality of partitioned regions of the image object 51. The above regions refer to, for example, units forming the image object 51. More specifically, the regions correspond to the head, the body, the feet and the legs of the image object 51. Further, in the above case, when the pointer 45 is placed closer to each region, balloon displays 62A, 62B, 62C and 62D are displayed on the display unit 23. Meanwhile, a product comment related to the head of the image object 55 of a human shape is displayed in the balloon display 62A, a product comment related to the body of the image object 55 of a human shape is displayed in the balloon display 62B, a product comment related to the legs of the image object 55 of a human shape is displayed in the balloon display 62C and a product comment related to the feet of the image object 55 of a human shape is displayed in the balloon display 62D, respectively. When the image object which is partitioned into a plurality regions and which associates user attribute information with each region is acquired, it is easy to present more information to users. In addition, although the above regions have been described as the head, the body, the legs and the feet, these units may be an upper body and a lower body of the image object 51 or may be set in more detailed units than the head, the body, the legs and the feet. Further, the number of regions may be changed according to the number of types of products which the first user purchased. In addition, in this case, a web site designated by the first user is a web site at which a product can be purchased.

Thus, the system control unit 26 of the user terminal 20 functions as an example of an image object acquiring means that acquires an image object which is partitioned into a plurality of regions and which associates a product comment with each region. Further, the system control unit 14 of the shopping server 10 functions as an example of an image object acquiring means that acquires an image object which is partitioned into a plurality of regions and which associates a product comment with each region by providing the resident program to the user terminal 20. Thus, when the image object 51 which is partitioned into a plurality of regions and which associates a product with each region is acquired, it is easier to present to a user individual product information in relation to each region.

### (Second Embodiment)

Next, an information processing system according to a second embodiment of the present invention will be described based on the drawings. In addition, a configuration of the information processing system according to the present embodiment is the same as the information processing system according to the first embodiment, and, for example, operations will be described by assigning the same reference numerals to the same or corresponding portions as in the first embodiment. The same also applies to other embodiments and modified examples.

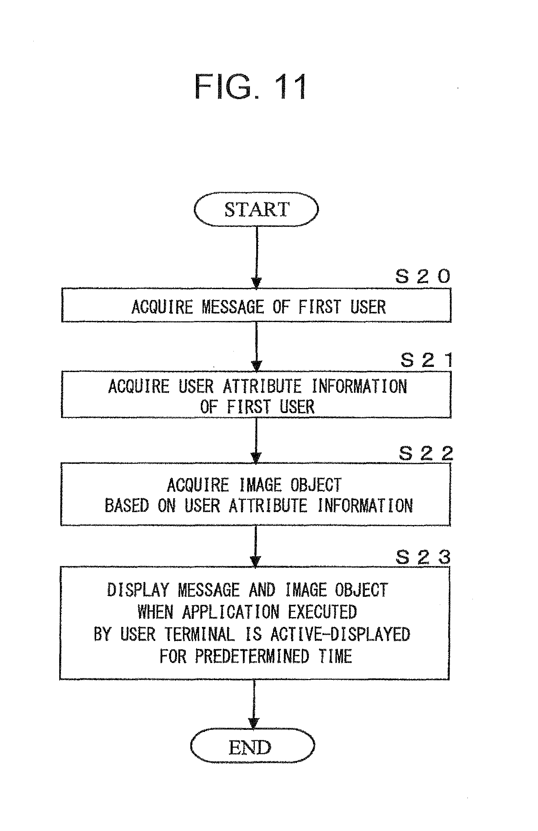

An operation according to the second embodiment of the present invention will be described using Fig. 11.

After receiving and storing a message such as a product comment from a user terminal 30 in step S1, a shopping server 10 acquires the message such as the product comment of a first user (step S20). More specifically, a system control unit 14 of the shopping server 10 acquires a message such as a product comment from a member DB 12b based on a user ID of the first user.

Next, the shopping server 10 acquires user attribute information of the first user (step S21). More specifically, the system control unit 14 of the shopping server 10 acquires the user attribute information from the member DB 12b based on the user ID of the first user. Thus, the system control unit 14 of the shopping server 10 functions as an example of an information acquiring means that acquires user attribute information related to attributes of the first user, and a product comment of the first user on a product.

Next, the shopping server 10 acquires an image object based on the user attribute information (step S22). More specifically, the system control unit 14 of the shopping server 10 acquires a corresponding image object from an image object DB 12c based on the sex and the age of the first user included in the user attribute information of the first user and conditions selected by the first user. Thus, the system control unit 14 of the shopping server 10 functions as an example of an image object acquiringmeans that acquires the image object which is displayed on a display unit of a user terminal of a second user and which is based on user attribute information.

Next, when an application executed by a user terminal 20 is active-displayed for a predetermined time, a message such as a product comment and an image obj ect are displayed on a display unit 23 of the user terminal 20 (step S23) . As in step S7, in a state where the predetermined time passes after the application executed by the user terminal 20 is activated, and the application is active-displayed, a product comment of the first user and an image object of the first user are displayed on a display unit 32.

Further, when a predetermined time does not pass or when an application is not active-displayed even after, for example, a product comment is received, a system control unit 26 of the user terminal 20 does not display, for example, a product comment and causes, for example, an image object 50 and a product comment 60a to be displayed on the display unit 23 when a predetermined time passes after the application is activated and is active-displayed. In addition, when a screen-saver of an operation system is activated in addition to software such as a document creating application, the system control unit 26 of the user terminal 20 may display a message or an image object. Further, an image object 70 and a message as in, for example, a balloon display 80 displayed on the user terminal 30 may also be displayed by a system control unit of the user terminal 30 similar to, for example, this image object 50 and the product comment 60a.

Thus, the system control unit 26 of the user terminal 20 functions as an example of a display means that causes a message and link information to be displayed on a terminal according to an activation state of software executed by a terminal. Further, the system control unit 26 of the user terminal 20 functions as an example of a display means that causes the display unit to display an image object, a product comment, and link information to a web page which lists information related to a product, when an application executed by the user terminal is active-displayed for a predetermined time. Furthermore, the system control unit 14 of the shopping server 10 functions as an example of a display means that causes the display unit to display an image object, a product comment and link information to a web page which lists information related to a product by providing the resident program to, for example, the user terminal 20 when an application executed by the user terminal is active-displayed for a predetermined time.

In addition, according to the resident program which causes the display unit 23 of the user terminal 20 to display the image obj ect 50, the user terminal 20 may inquire to the shopping server 10 on a regular basis as to whether or not a product comment of a friend is newly registered in the member DB12b. Further, according to this resident program, the user terminal 20 may make a request to the shopping server 10, stand by without immediately receiving a response from the shopping server 10 and push a product comment or an image object from the shopping server 10 at a point of time when a product comment of a friend is newly registered in the member DB 12b . Furthermore, according to the resident program, the user terminal 20 may receive an image obj ect in advance, and cause the image obj ect to be displayed on the display unit 23 at a time when a signal confirming that a product comment of a friend is newly registered in the member DB 12b is received.

Next, when the second user shows an interest, moves the pointer 45 by means of an operation unit 24 and clicks the link information 60b or the image object 50, the system control unit 26 of the user terminal 20 receives a web page which lists information related to a product, from the shopping server 10 and controls the display unit 23 to display the web page. In addition, when the web browser has not been activated, the web browser is activated and then a web page is displayed.

As described above, according to the present embodiment, user attribute information related to attributes of the first user and a product comment on a product of the first user are acquired from the user terminal 30 of the first user, the image object 50 which is displayed on the display unit 23 of the user terminal 20 of the second user and which is based on user attribute information is acquired, and, when an application executed by the user terminal 20 is active-displayed for a predetermined time, an image object, a product comment and link information to a web page which lists information related to a product are displayed on the display unit 23, so that the second user is guided to a predetermined web page according to recommendation of the first user and it is possible to promote sales of a product to the second user.

Further, in case that a message and link information are displayed on the user terminal 20 according to an activation state of software executed by the user terminal 20, a message can be displayed at timings when the second user has little uncomfortable feeling such as a timing when a predetermined time passes after an application which is software is activated or a timing when a screen saver which is software is activated. In addition, the image object 70 and a message as in, for example, the balloon display 80 displayed on the user terminal 30 may also be displayed by the system control unit of the user terminal 30 similar to the message and the link information.

Further, when the second user accesses a web site (when, for example, the second user browses a given web site or performs purchase procedure at a given web site), a message and link information may be displayed on the user terminal 20. In this case, the second user performs an operation of accessing a given web site to browse a web page, so that it is possible to display amessage at a timing when the second user has little uncomfortable feeling.

### (Third Embodiment)

Next, an information processing system according to a third embodiment of the present invention will be described based on the drawings.

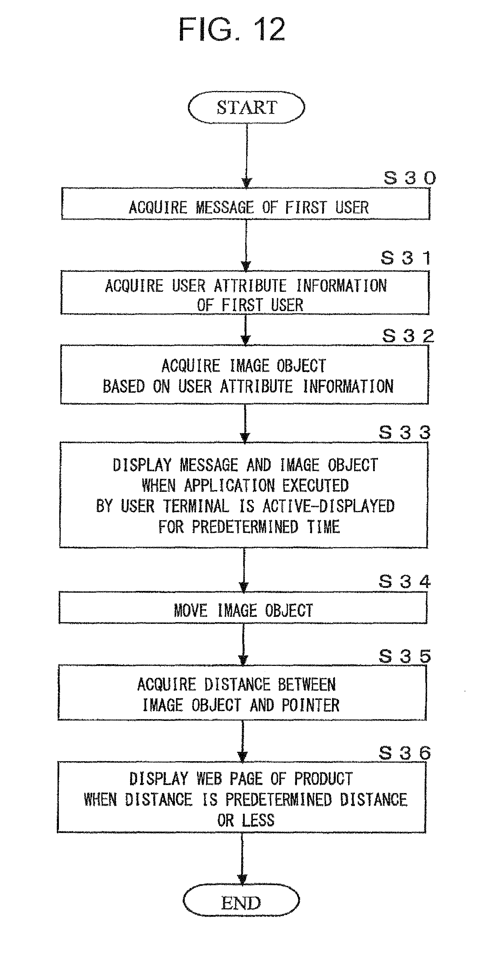

An operation according to the third embodiment of the present invention will be described using Figs. 12 to 15. In addition, steps S11 to S14 are the same as steps S1 to S4 according to the first embodiment, and therefore different steps will be described in detail.

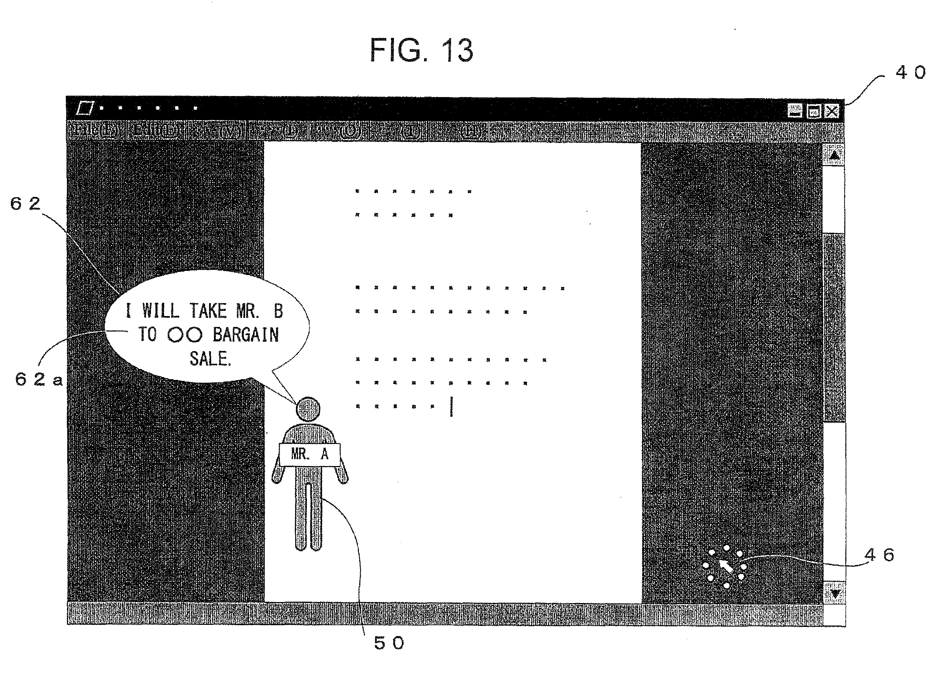

Fig. 12 is a flowchart that illustrates an operation example of the information processing system according to the third embodiment. Figs. 13 to 15 are schematic diagrams that illustrate examples of screen displays according to the third embodiment.

The shopping server 10 acquires a message such as a product comment of the first user and user attribute information (steps S30 and S31) , and acquires an image obj ect based on user attribute information (step S32). When the application executed by the user terminal 20 is active-displayed for a predetermined time, the product comment and the image object are displayed on the display unit 23 of the user terminal 20 (step S33).

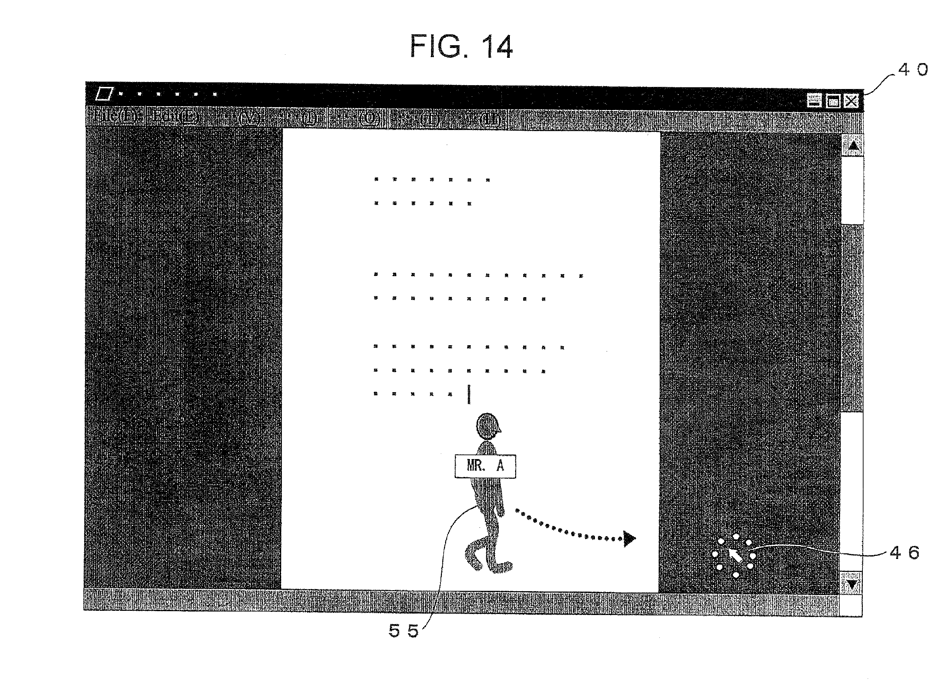

Next, after the product comment 60a and the image object 50 are displayed on the display unit 23, the image object 50 starts moving (step S34). More specifically, as illustrated in Fig. 13 first, the system control unit 26 of the user terminal 20 displays a balloon display 62 including a product comment 62a on "Mr. B" who is the second user according to a resident program, and starts moving the image object 50 toward a pointer 46. Further, as illustrated in Fig. 14, an image obj ect 55 taking a walking posture starts walking toward the pointer 46.

Thus, the system control unit 26 of the user terminal 20 functions as an example of an image object moving means that moves an image object on a display unit of a terminal. Further, the system control unit 14 of the shopping server 10 functions as an example of an image obj ect moving means that moves an image object on the display unit by transmitting a resident program for causing the image object 50 to be displayed on the display unit 23 of the user terminal 20, to the user terminal 20.

Next, a distance between an image object and a pointer is acquired (step S35) . More specifically, the system control unit 26 of the user terminal 20 acquires information about a position of the pointer 46 from the operation unit 24 according to the resident program, and calculates distances between the image objects 50 and 55 and the pointer 46.

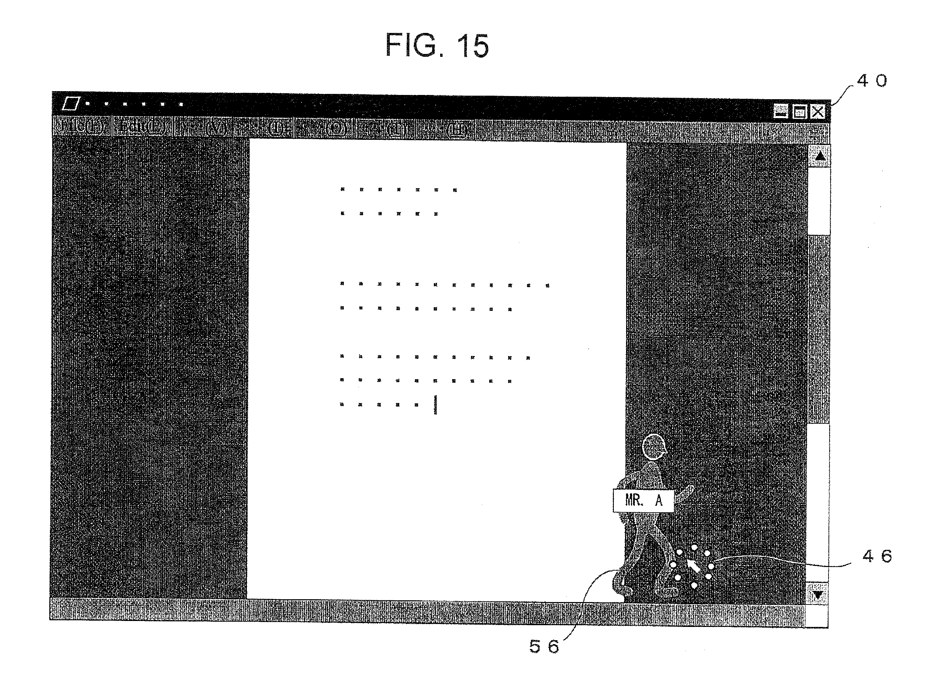

Next, the shopping server 10 causes a web page of a product to be displayed when the distances are a predetermined distance or less (step S36) . More specifically, as illustrated in Fig. 15, the system control unit 14 of the shopping server 10 receives information of a web page of a product purchased or recommended by the first user, from the shopping server 10 when the distance between the image object 56 and the pointer 46 is a predetermined distance or less, and controls the display unit 23 to display the information.

Further, when distances between the image objects 50 and 55 and the pointer 46 become longer, that is, when the image objects 50 and 55 are moving away from the pointer 46, the system control unit 26 of the user terminal 20 erases the image objects 50 and 55 assuming that the user is not interested in the image objects 50 and 55 according to the resident program. Further, when deciding that the user is moving the pointer 46 closer to the image objects 50 and 55 according to the resident program, the system control unit 26 of the user terminal 20 receives information of a web page of a product from the shopping server 10, and controls the display unit 23 to display the web page.

Thus, the system control unit 26 of the user terminal 20 functions as an example of a web page display means that causes a web page which lists information related to a product to be displayed on a display unit according to a change in a distance between an image object and a pointer displayed on the display unit. Further, the system control unit 14 of the shopping server 10 functions as an example of a web page display means that causes a web page which lists information related to a product to be displayed on a display unit, based on a change in a distance between an image object and a pointer displayed on the display unit by transmitting a resident program for displaying the image object 50 on the display unit 23 of the user terminal 20, to the user terminal 20.

In addition, the system control unit 14 of the shopping server 10 may function as an example of an image object moving means that moves an image object on a display unit by acquiring position information on the display unit 23 of the pointer 46, or a web page display means that causes a web page which lists information related to a product to be displayed on a display unit, based on a change in a distance between an image object and a pointer displayed on the display unit.

As described above, according to the present embodiment, by causing a web page of a link destination of link information to be displayed on the display unit according to a change in a distance between the image obj ect 50 and the pointer 4 6 displayed on the display unit 23, it is possible to detect a motion caused by a user's operation, estimate that the user wants to browse the link destination and automatically display the web page of the link destination.

Further, user attribute information related to attributes of a user is acquired, the image object 50 which is displayed on the display unit 23 and which is based on the user attribute information is acquired, the image object 50 is displayed on the display unit 23 and the image object is moved on the display unit 23 when an application executed by the display unit 23 is active-displayed for a predetermined time, and a web page which lists information related to a product recommended by the first user is displayed on the display unit 23 according to a change in distances between the image objects 50, 55 and 56 and the pointer 46 displayed on the display unit 23, so that the second user is automatically guided to a predetermined web page according to recommendation of the first user and it is possible to promote sales of the product to the second user.

Further, by moving an image object on the display unit 23, and displaying a web page which lists information related to a product on the display unit 23 based on a change in distances between the image objects 50, 55 and 56 and the pointer 46 displayed on the display unit 23, it is possible to automatically present information related to the product.

In addition, by identifying a blank area which does not display a display element displayed on a screen of the display unit 23 of the user terminal 20, a message and link information may be displayed in the identified blank area. In this case, as illustrated in Fig. 6, the image obj ect 50 and a balloon display 60 which is an example of a message and link information can be displayed at positions where the image object and the balloon display do not bother user's operations and browsing.

A blank area is identified by identifying a saliency map with respect to, for example, a web page displayed on the screen of the display unit 23 . Meanwhile, the saliency generally refers to the degree of attraction of a visual attention. Further, the saliencymap refers to calculating and visualizing the degree of attraction of a visual attention according to a predetermined algorithm. Further, it is known that an area in which, for example, a text or an image is not displayed on the screen of the display unit 23 is shown by a color (roughly, purple to green) corresponding to visible light of a short wavelength in the saliency map.

The system control unit 26 of the user terminal 20 generates the saliencymap from a captured image on the screen of the display unit 23, and identifies a plurality of rectangular areas which are accommodated in an area in which a color corresponding to visible light of a shorter wavelength than a predetermined reference is continuously shown. The system control unit 26 of the user terminal 20 selects a blank area having a size which can display the image object 50 or the balloon display 60 from the identified rectangular areas.

Further, the system control unit 26 of the user terminal 20 may display a message and link information on a terminal when the second user accesses a web site. In this case, it is possible to reliably send the message when the second user accesses a web site designated by the first user, that is, it is possible to reliably send the message to a user who shows an interest in the designated web site. Further, the web site is not the same, so that the user has little uncomfortable feeling.

Furthermore, the present invention is by no means limited to the above embodiments. The embodiments are exemplary embodiments, and all inventions having substantially the same configuration as the technical idea recited in the claims of the present invention, and providing the same function and effect are incorporated in the technical range of the present invention.

### EXPLANATION OF REFERENCE NUMERALS

- 3:: NETWORK
- 10:: SHOPPING SERVER (INFORMATION PROCESSING DEVICE)
- 11:: COMMUNICATION UNIT
- 12:: STORAGE UNIT
- 12a:: PRODUCT DB
- 12b:: MEMBER DB
- 12c:: IMAGE OBJECT DB
- 14:: SYSTEM CONTROL UNIT
- 20:: USER TERMINAL (TERMINAL OF SECOND USER, INFORMATION PROCESSING DEVICE)
- 21:: COMMUNICATION UNIT
- 22:: STORAGE UNIT
- 23:: DISPLAY UNIT
- 24:: OPERATION UNIT
- 26:: SYSTEM CONTROL UNIT
- 30:: USER TERMINAL (TERMINAL OF FIRST USER)
- 35:: USER TERMINAL (TERMINAL OF THIRD USER)
- 45, 46:: POINTER
- 50, 50A, 50B, 50C, 50D, 50E, 51, 55, 56:: IMAGE OBJECT
- 60a, 61a:: PRODUCT COMMENT
- 60b, 61b, 61c:: LINK INFORMATION

## Claims

1. An information processing device comprising:
an information acquiring means that acquires a message related to a web site designated by a first user and link information to a web page of the web site, from a storage means that stores the message and the link information;
a transmitting means that transmits the message and the link information to a terminal device to cause the message and the link information to be displayed on the terminal device of a second user;
a receiving means that receives selection information showing that the second user selects the web page shown by the link information from the terminal device; and
a notification processing means that performs notification processing of notifying to the first user that the web page shown by the link information is selected.

2. The information processing device according to claim 1,
wherein the information acquiring means acquires an image object displayed on the terminal device, and
the transmitting means transmits the image object along with the message and the link information.

3. The information processing device according to claim 2,
wherein the information acquiring means acquires user attribute information related to an attribute of the first user, and
the transmitting means transmits the image object based on the user attribute information.

4. The information processing device according to claim 2 or 3,
wherein a web site designated by the first user is a web site at which a product is purchased, and
the information acquiring means acquires the image object which is partitioned into a plurality of regions and which associates the product with each of the regions.

5. The information processing device according to any one of claims 1 to 4, wherein the notification processing means performs notification processing to a third user that the web page shown by the link information is selected.

6. An information processing method of processing information in an information processing device, comprising:
an information acquiring step of acquiring a message related to a web site designated by a first user and link information to a web page of the web site, from a storage means that stores the message and the link information;
a display step of causing the message and the link information to be displayed on a terminal device of a second user; and
a notification processing step of, when the second user selects the web page shown by the link information, performing notification processing of notifying to the first user that the web page is selected.

7. An information processing program causing a computer to execute:
an information acquiring step of acquiring a message related to a web site designated by a first user and link information to a web page of the web site, from a storage means that stores the message and the link information;
a display step of causing the message and the link information to be displayed on a terminal device of a second user; and
a notification processing step of, when the second user selects the web page shown by the link information, performing notification processing of notifying to the first user that the web page is selected.

8. The information program according to claim 7,
wherein the information acquiring step acquires an image object displayed on the terminal device, and
the display step displays the image object along with the message and the link information.

9. The information processing program according to claim 8,
wherein the information acquiring step acquires user attribute information related to an attribute of the first user, and
the display step displays the image object based on the user attribute information.

10. The information processing program according to claim 8 or 9,
wherein a web site designated by the first user is a web site at which a product is purchased, and
the information acquiring step acquires the image object which is partitioned into a plurality of regions and which associates the product with each of the regions.

11. The information processing program according to any one of claims 7 to 10, wherein the display step causes the message and the link information to be displayed on the terminal device according to an activation state of software executed by the terminal device.

12. The information processing program according to any one of claims 7 to 11, wherein, when the second user accesses a web site, the display step causes the message and the link information to be displayed on the terminal device.

13. The information processing program according to any one of claims 7 to 12, wherein, when the second user selects the web page shown by the link information, the notification processing step performs notification processing of notifying to a third user that the web page is selected.

14. The information processing program according to any one of claims 7 to 13, causing the computer to further execute:
an image object moving step of moving the image object on a display unit of the terminal device; and
a web page display step of displaying a web page of a link destination of the link information on the display unit according to a change in a distance between the image object and a pointer displayed on the display unit.

15. The information processing program according to any one of claims 7 to 14, wherein the display step causes an application executed by the terminal device to display the image object in a vicinity of a display area displayed in a display unit of the terminal device.

16. The information processing program according to any one of claims 7 to 14, causing the computer to further execute a blank area identifying step of identifying a blank area which does not display a display element displayed in a screen of a display unit of the terminal device,
wherein the display step causes the message and the link information to be displayed in the identified blank area.

17. A computer-readable storage medium having an information processing program recorded thereon which causes a computer to execute:
an information acquiring step of acquiring a message related to a web site designated by a first user and link information to a web page of the web site, from a storage means that stores the message and the link information;
a display step of causing the message and the link information to be displayed on a terminal device of a second user; and
a notification processing step of, when the second user selects the web page shown by the link information, performing notification processing of notifying to the first user that the web page is selected.
